# EUROPEAN PATENT APPLICATION

(11) **EP 0 536 445 A1**
(43) Date of publication of application: **14.04.1993**
(21) Application number: 91202642.4
(22) Date of filing: 11.10.1991
(51) Int. Cl.: F24D 5/04, F24F 7/10

(54) **A method for optional heating or cooling the air in a building**

(71) Applicant: CA BYGG AB, S-391 27 Kalmar (SE)
(72) Inventor: Kylefalk, Erik, S-393 63 Kalmar (SE)
(74) Representative: Nydell, Peder

(57) **Abstract**

A method for optional heating or cooling the air in a building which has an air-permeable roof (1) and a floor (11) which is designed as a radiation source for heating and, respectively, as a radiation receiver for cooling the air in the building. When there is a heat demand, the roof is used as a counterflow roof, whereas, when there is a cooling demand, the roof is used as a parallel flow roof by causing exhaust air to be extracted from the building through the roof during simultaneous energy exchange with outdoor air, so that this will be cooled before it enters the building as supply air. The floor is utilized as a radiation receiver for supplementary cooling, i.e. for final adjustment of the temperature of the air in the building. When there is a cooling demand the supply air will be conducted into the building through low velocity air terminal devices (13) at floor level.

## Description

### TECHNICAL FIELD

The present invention relates to a method according to the preamble of claim 1 for optional heating or cooling the air in a building, which has an air-permeable roof and a floor which is designed as a radiation source for heating and, respectively, as a radiation receiver for cooling the air in the building, thereby offering the possibility, when there is a heat demand in the building, of using the floor as said radiation source for heating the air in the building, and of using the roof as a counterflow roof for conducting outdoor air downwards through the roof and into the building.

### BACKGROUND ART

A method of the aforementioned kind is known from WO 90/04135. The known method is based on the principle that substantially no supply air for the building is pre-heated, and that it flows downwards through the counter-flow roof, whereas the entire heat demand of the building is fulfilled by heat from the base slab. However, such a method will limit the amount of supply air, particularly in buildings having a low roof height. Therefore, many buildings that have a big air demand have to supplement its air distribution by any conventional technique.

The known method will also cause, during summer time, a disadvantageous increase in temperature of the supply air before its passage through the counterflow roof. The roof surface, which itself serves as a solar collector and thus offers certain advantages during heating periods, will, during hot seasons increase air temperature to an often unacceptable level, which brings about a disadvantageous increase of the temperature in the building, and will also bring about that the supply air will not be able, due to its high temperature, to overcome the thermodynamic forces and descend to the level where it should be in order to offer a good ventilation.

Additionally, the known method requires that the energy recovery which is prescribed according to present statutes has to be performed entirely by means of heat pump technique in order to enable the recovered energy to return to the heating or consumption medium of the building. This technique is very expensive with regard to installation work, and also requires repeated maintenance work in order to maintain its efficiency.

### DISCLOSURE OF INVENTION

The object of the present invention is, therefore, to provide a method of the aforementioned kind, where the advantages of the known method have been maintained, but where the above-mentioned drawbacks have been eliminated, and where the energy recovery system is just as simple as the supply air system, and where a good ventilation will be achieved without any disadvantageous increase of the temperature of the supply air during hot seasons.

This object is achieved by a method according to the invention having the characterizing features of claim 1.

Further developments of the invention are apparent from the sub-claims.

### BRIEF DESCRIPTION OF DRAWINGS

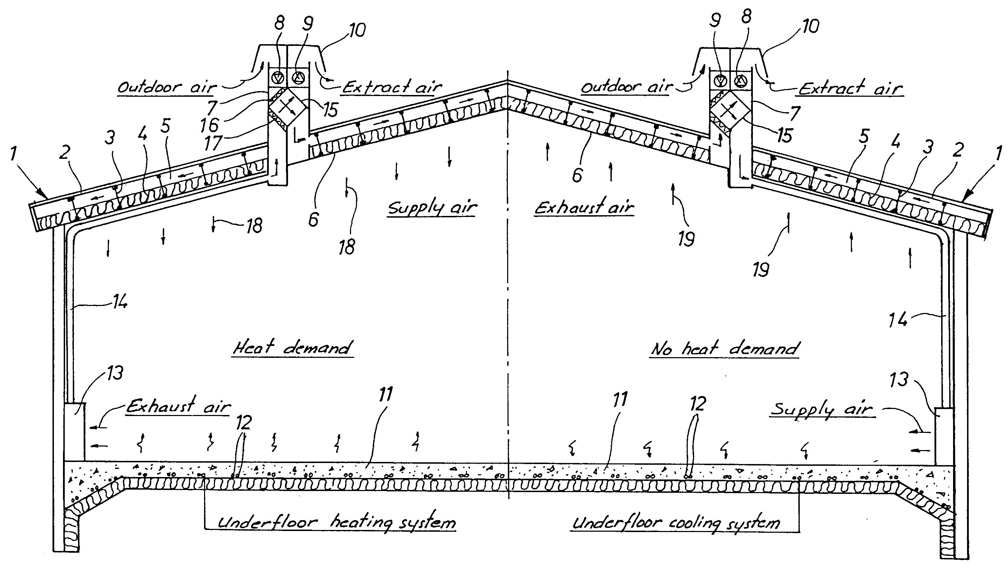

The invention will be described in more detail by reference to the accompanying drawing, where the single Figure illustrates a section of a building, where the method in accordance with the invention is applicable.

### DESCRIPTION OF ONE EMBODIMENT OF THE INVENTION

The Figure schematically illustrates a building using the method according to the invention for controlling the temperature of the incoming supply air. The left half of the Figure shows the method according to the invention where there is a demand of heating the air in the building, whereas the right half of the Figure shows a reversed method, where there is no heat demand.

A roof structure which is of counterflow-type and is generally designated 1, comprises an outer roofing 2, structural beams 3 and insulation 4. The beams 3 are suitably open, i.e. they have a web which allows air to pass, such that a coherent air gap 5 is defined above the insulation 4. The insulation 4 may conveniently consist of mineral wool, insulating fibres or the like, and rests on a pressure drop layer 6 which simultaneously can form the ceiling. The pressure drop layer serves to uniformly distribute the air flow over the entire roof surface in the gap 5 by the formation of a positive pressure in the gap 5, and may consist of an air-permeable cloth, a perforated board or the like.

Mounted on the roof is a housing 7 for accommodating two reversible fans 8 and 9 for blowing supply air or extracting exhaust air in a way to be described below. The housing 7 is protected by a rainhood 10.

The building rests, in the embodiment shown, on a base slab 11 which is disposed directly on the ground. Conduits 12 are positioned under the base slab, and a heating medium, such as water, is caused to circulate in said conduits. The conduits are preferably laid under the concrete, but can also be cast into the base slab. Alternatively, the positioning of the conduits may be in framed floors.

A low velocity air terminal device 13, which may serve either as an exhaust air means or as a supply air means, is positioned at floor level in the building. The air terminal device 13 communicates via a conduit 14 with the housing 7.

The air streams generated by the fans 8 and 9 are in heat transfer relation with one another because the two air streams cross one another in an energy exchanger 15 being positioned in the housing 7, the exchanger being for instance a cross stream exchanger, battery exchanger or rotary exchanger or the like. The two inputs of the energy exchanger has a respective air cleaning filter 16 and 17, respectively, thereby maintaining the efficiency of the energy exchanger.

The left half of the Figure shows the case where there is a demand of heating the air in the building, whereas the right half of the Figure shows the reversed case where no heat demand exists.

To provide heating of the air, see the left half of the Figure, the fan 8 blows outdoor air into the housing 7, through the energy exchanger 15, then through the insulation 4 and downwards through the air-permeable roof layer 6, as is shown by arrows 18.

Exhaust air is extracted from the building via the low velocity air terminal device 13, which, accordingly, in this case serves as an exhaust air means. The exhaust air is conducted via the conduit 14 up to the housing 7 at the roof and through the enery exchanger 15, from which it is extracted to the environment by the fan 9. Energy recovery will thereby be performed in the energy exchanger 15 by the heat delivery from the exhaust air to the outdoor air such that this will be preheated before it enters as supply air down through the counterflow roof into the building.

The heat from the radiating floor 11 will thus be used only to supplement the heat obtained by energy recovery from the exhaust air, i.e. for final adjustment of the temperature of the air in the building.

To provide cooling of the air, see the right half of the Figure, the fans 8 and 9 are reversed, i.e. the fan 9 blows outdoor air from the environment via the energy echanger 15 down through the conduit 14 to the means 13, which, thus, in this case serves as a low velocity supply air terminal device. The exhaust air thereby flows upwards, see the arrows 19, and out through the air-permeable roof, which now serves as a parallel flow roof instead of a counterflow roof, and thereafter flows through the energy exchanger 15, and is finally extracted into the environment by the fan 8. Thanks to the energy exchanger 15, the outdoor air will, if the outdoor temperature exceeds the exhaust air temperature, be cooled somewhat by the exhaust air, before the outdoor air is delivered as supply air by the means 13. By, in this case, delivering the supply air at a low level (at the floor) during simultaneous extracting of exhaust air at the roof, a good ventilation will be obtained without any temperature increase of the supply air and with maintained thermodynamic motions.

## Claims

1. A method for optional heating or cooling the air in a building, which has an air-permeable roof (1) and a floor (11) which is designed as a radiation source for heating and, respectively, as a radiation receiver for cooling the air in the building, thereby offering the possibility, when there is a heat demand in the building, of using the floor as said radiation source for heating the air in the building, and of using tee roof as a counterflow roof for conducting outdoor air downwards through the roof and into the building, **characterized** in that, when there is a cooling demand in the building, the roof is instead used as a parallel flow roof by causing exhaust air from the building to leave through the roof during simultaneous energy exchange with said outdoor air, such that this will be cooled before it enters the building as supply air, the floor in this case being used as said radiation receiver for supplementary cooling and, accordingly, for final adjustment of the temperature of the air in the building.

2. A method according to claim 1, **characterized** in that, when there is a cooling demand, the supply air is conducted into the building via low velocity air terminal devices (13) at floor level.

3. A method according to any preceding claim, **characterized** in that the outdoor air and the exhaust air are energy exchanged with one another in a housing (7) at the roof by an energy exchanger (15) located therein.
